Europäisches Patentamt

European Patent Office

Office européen des brevets

(11) Veröffentlichungsnummer: **0 365 958**

**A2**

## EUROPÄISCHE PATENTANMELDUNG

(21) Anmeldenummer: **89119143.9**

(51) Int. Cl.5: **G05B 19/18**

(22) Anmeldetag: **14.10.89**

(30) Priorität: **25.10.88 DE 3836263**

(43) Veröffentlichungstag der Anmeldung:
**02.05.90 Patentblatt 90/18**

(84) Benannte Vertragsstaaten:
**AT CH DE FR GB IT LI NL SE**

(71) Anmelder: **MTU MOTOREN- UND TURBINEN-UNION MÜNCHEN GMBH**
**Dachauer Strasse 665 Postfach 50 06 40**
**D-8000 München 50(DE)**

(72) Erfinder: **Matoni, Michael, Dr.**
**Ferdinand-Maria-Strasse 2B**
**D-8130 Starnberg(DE)**

(54) **Verfahren zur Kompensation einer thermisch bedingten Nullpunktverschiebung bei Bearbeitungsmaschinen, insbesondere Drehmaschinen sowie Vorrichtung zur Durchführung des Verfahrens.**

(57) Es wird ein Verfahren zur Kompensation einer thermisch bedingten Nullpunktverschiebung eines zur mechanischen Bearbeitung gehalterten Werkstücks gegenüber einem an einem Werkzeugträger angeordneten Werkzeug bei einer automatisch gesteuerten Bearbeitungsmaschine, insbesondere Drehmaschine behandelt; dabei sollen Meßtaster verwendet werden, mit welchen Abweichungen zwischen einer programmierten und einer tatsächlichen Position des Werkzeugs gegenüber dem Werkstück festgestellt und korrigiert werden; hierzu soll erfindungsgemäß nach dem.Aufspannen des Werkstücks ein in den Werkzeugträger eingespannter Werkstückmeßtaster in bezug auf die tatsächliche Position eines zu bearbeitenden oder bereits bearbeiteten Werkstücks im Wege mechanischer Berührung einjustiert und eine Nullpunktjustierung einer mit einem Werkzeugmeßtaster gekoppelten Werkzeugmeßeinrichtung über den einjustierten Werkstückmeßtaster durchgeführt werden.

EP 0 365 958 A2

# Verfahren zur Kompensation einer thermisch bedingten Nullpunktverschiebung bei Bearbeitungs maschinen, insbesondere Drehmaschinen sowie Vorrichtung zur Durchführung des Verfahrens

Die Erfindung bezieht sich auf ein Verfahren nach dem Oberbegriff des Patentanspruchs 1.

Werkzeugmaschinen, insbesondere Drehmaschinen, unterliegen thermisch bedingten Expansionen des Maschinensystems. Hieraus resultieren Wanderungen der Nullpunkte zueinander, z. B. der Spindel (Werkstück), einer Werkzeugmeßeinrichtung und eines Werkzeugträgers. Die Summe der Wanderungen führt zu falschen Positionen des Werkzeugs relativ zum Werkstück. Hieraus ergeben sich Positionsfehler in einer Größenordnung bis etwa 100 μm und selten darüber.

Als Konsequenz hieraus muß der betreffende Werker die Werkzeugposition des öfteren nachkorrigieren; es müssen zusätzliche Kalibermessungen sowie Meßschnitte vorgenommen werden sowie gegebenenfalls sogenannte "Erfahrungswerte" mitverrechnet werden.

Zwecks Kalibrierung in ansich bekannter Weise schon verwendeter sogenannte "Meisterstücke", die auf der Spindel der betreffenden Bearbeitungsmaschine mit der geforderten Umlaufgenauigkeit auszurichten wären, führen zu einem vergleichsweise hohen Rüstaufwand (Maschinenumbau, Positionierung) sowie zu zeitlich aufwendigen Eichvorkehrungen unter Einschluß damit zusammenhängener Fehlermöglichkeiten.

Aus der DE-PS 35 30 567 ist ein Verfahren und eine Vorrichtung zur Werkzeugtastprüfung bekannt. Mittels einer direkt an einer Drehmaschine befestigten Referenzsäulenvorrichtung soll im bekannten Fall die Notwendigkeit eines am Spannfutter anzuordnenden Referenzringes (Referenzfläche) beseitigt werden können. Dabei soll eine zur Vorrichtung gehörige Referenzsäule in geeichter Position sowie federnd an der Maschine sowie in bezug auf das Werkstück angeordnet sein. Die Referenzsäule soll ferner in Ultraschallschwingungen versetzbar sein. Ein am Revolverkopf der betreffenden Drehmaschine angeordneter Beschleunigungsmesser soll auf die Referenzsäulenschwingungen reagieren, wenn ein Werkzeug als Tastmeßfühler mit der Referenzsäule in Berührung gebracht wird. Das Ausgangssignal des Beschleunigungsmessers soll dann im bekannten Fall vom Revolverkopf durch einen Drehkoppler übertragen, aufbereitet und anschließend einer numerischen Steuereinheit zugeführt und entweder zum Eichen oder Lehren von Teilen bei der spanabhebenden Bearbeitung verwendet werden.

Der vorliegende bekannte Fall sucht Verbesserungen bei der Messung der sogenannten "Meßschnitte" zu schaffen, indem die "Meßschnitte" in allen Lagen nur mit dem entsprechenden Werkzeug gemessen werden sollen; jedoch geht die beabsichtigte Verbesserung bei der Werkstückvermessung wiederum von der These eines praktisch vorhandenen festen, starren Nullpunktes aus; mithin wären Korrekturen der Werkzeugschneidenlage wiederum mit dem Fehler der thermischen Wanderung behaftet. Auf "Meßschnitte" kann im vorliegenden bekannten Fall also nicht verzichtet werden.

Der Erfindung liegt die Aufgabe zugrunde, die zu Bekanntem vorgetragenen Nachteile zu beseitigen und ein extrem vereinfachtes Verfahren zur Kompensation der thermisch bedingten Nullpunktverschiebungen zu schaffen, daß praktisch ohne manuelle Eingriffe in den Arbeitsablauf auskommt.

Die gestellte Aufgabe ist mit den Merkmalen des Kennzeichnungsteils des Patentanspruchs 1 erfindungsgemäß gelöst.

Beim vorliegenden Verfahren existiert also kein absolut ruhender Nullpunkt oder eine absolut ruhende Bezugsfläche; erfindungsgemäß findet also keine Korrektur auf eine "absolut richtige" Lage statt. Vielmehr beruht die Erfindung auf der Herstellung einer relativen Übereinstimmung zwischen den Nullpunkten der Spindel, der Werkzeugmeßeinrichtung und des Werkzeugträgers. Mit anderen Worten werden also die betreffenden maschinellen Wanderungsbeträge gemessen und korrigiert.

Es ist somit ein selbstregelnder Bearbeitungsablauf darstellbar, der für eine Fertigungstoleranzbreite ≥ 30 μm keine Nachkorrektur des betreffenden Werkers erfordert.

Gemäß der Erfindung wird also der dem Stand der Technik grundsätzlich anhaftende Nachteil hinsichtlich der Notwendigkeit sogenannter "Meßschnitte" beseitigt; es entfällt demzufolge auch die Notwendigkeit der Messung besagter Meßschnitte mit den daraus resultierenden Fehlermöglichkeiten wie Ausschuß oder Nachbearbeitung.

Im Falle der vorliegenden Erfindung stellt also das zu bearbeitende oder schon bearbeitete Werkstück praktisch "das Meisterstück" dar. Somit ist es vorteilhafter Weise möglich, bereits vor der tatsächlichen Werkstückbearbeitung eine durch thermisch bedingte Bauteilwande rungen (Umgebungsbedingungen) verursachte Nullpunktverschiebung festzustellen und zu korrigieren. Ein Meßschnitt ist somit nicht notwendig.

Ferner ist das erfindungsgemäße Verfahren im Rahmen des laufenden Bearbeitungsprozeßes je nach Belieben praktizierbar bzw. wiederholbar. Es können also auch die als Folge der Werkstückbearbeitung auftretenden Temperatureinflüsse, die zu einer Nullpunktverschiebung führen, fortlaufend berücksichtigt werden.

Die Kompensation kann ohne manuelle Eingriffe durchgeführt werden, zumal das Einwechseln "Werkzeug in Werkzeugmeßtaster" - oder umgekehrt maschinenseitig automatisch vonstatten geht.

Vorteilhafte weitere Verfahrensmerkmale und -Schritte ergeben sich aus Patentanspruch 2.

Anhand der Zeichnungen ist die Erfindung beispielsweise weiter erläutert; es zeigen:

Fig. 1 ein schematisch wiedergegebenes Drehmaschinenkonzept nebst Steuer- und Meßmitteln unter Einschluß der betreffenden Nullpunkte von Spindel nebst Werkzeug sowie des Werkzeugträgers und einer Werkzeugmeßeinrichtung,

Fig. 2 eine teilweise abgebrochen sowie schematisch dargestellte Seitenansicht des Werkzeugträgers aus Fig. 1, hier jedoch mit darin eingespanntem Werkzeug, letzteres in einer ersten Sollvorgabeposition (alter Sollwert Wo) und in einer im Hinblick auf thermische Wanderung neuen Vorgabeposition (neuer vorgabewert $W_1$) des Werkzeugträgers,

Fig. 3 eine scheamtisch dargestellte Draufsicht einer für Fig. 1 und 2 repräsentativen Drehmaschine, insbesondere unter zusätzlicher Verdeutlichung eines Werkzeugspeichers sowie eines in ruhe- und Betriebsstellung verfahrbaren Armes für den Werkzeugmeßtaster,

Fig. 4 ein blockschaltbildartig dargestelltes Steuerschema für die Durchführung des Verfahrens nach der Erfindung und

Fig. 5 die in bezug auf einen Abschnitt des zu bearbeitenden Bauteils bzw. Werkstücks angeordnete Position eines Werkstückmeßtasters in Verbindung mit dessen zugehörigen Auslenkungskriterien am Bauteil.

Die Erfindung befaßt sich mit der Optimierung der spanabhebenden Bearbeitung von insbesondere rotationssymmetrischen Bauteilen oder Bauteilstrukturen; bei den rotationssymmetrischen Strukturen kann es sich z. B. um die betreffende Außen- oder Innenkontur oder z. B. eine rotationssymmetrische Ausnehmung handeln. Ferner könte dabei das zu behandelnde Bauteil vom Grundsatz beliebig konturiert sein (Außenabmessungen), wenn es z. B. lediglich um die spanabhebende Fertigung einer zylindrischen Innenausnehmung in diesem Bauteil geht.

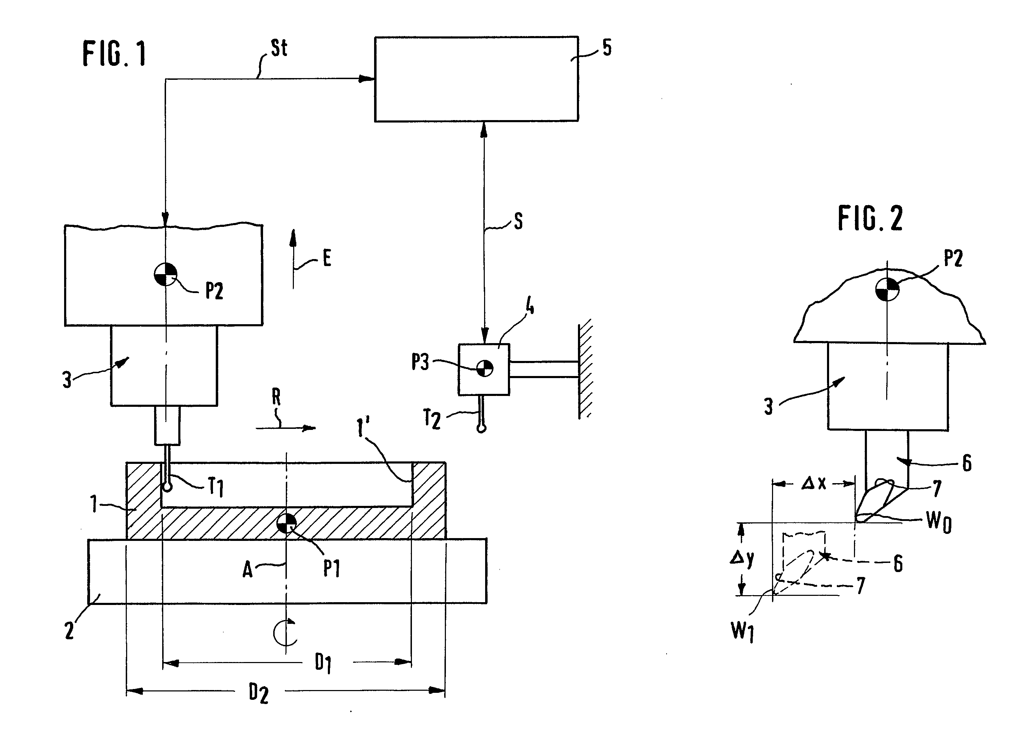

In Fig. 1 geht es z. B. um die Fertigung eines zylindrischen Bauteils 1 mit einer koaxialen zylindrischen Ausnehmung 1'. Hierbei wird davon ausgegangen, daß das Bauteil 1 über nicht weiter dargestellte Spannvorrichtungen absolut drehfest auf einer Spindel 2 einer betreffenden Drehmaschine sitzt. Die mit der Achse des Bauteils 1 zusammenfallende Drehachse der Spindel 2 ist mit A bezeichnet.

In Fig. 1 sind ferner ein zur Drehmaschine gehörender Werkzeugträger mit 3, eine Werkzeugmeßeinrichtung mit 4 und eine schematisch als Block wiedergegebene Maschinensteuerung mit 5 bezeichnet.

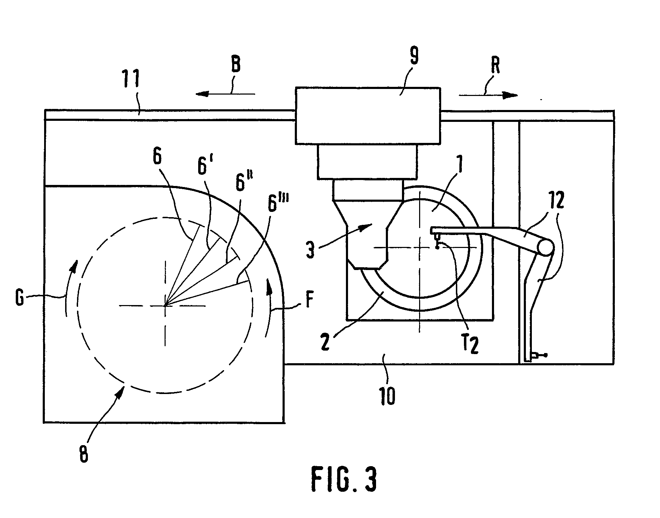

Für den Fall der Bearbeitung z. B. der betreffenden Innenwand der Ausnehmung 1' (Fig. 1) ist in den Werkzeugträger 3 (Fig. 2) ein spanabhebendes Werkzeug 6 eingespannt; die Schneidkantenkontur des Werkzeugs 3 ist mit 7 bezeichnet. Gemäß Fig. 3 wird dabei von einem maschinenseitig zugeordneten, rotatorisch (Pfeile F bzw. G) arbeitenden Werkzeugspeicher 8 ausgegangen, aus welchen die jeweils auf den betreffendken örtlichen Bearbeitungsvorgang abgestimmten Werkzeuge - hier punktuell schematisch mit 6, 6', 6'', 6''' usw. bezeichnet -automatisch abrufbar bzw. vom Werkzeugräger 3 herausgreifbar und ihrer Verwendung zuführbar sind. Dafür kann z. B. der Werkzeugträger 3 unter Zuordnung eines Schlittens 9 längs einer an einem Maschinenbett 10 verankerten Laufschiene 11 verfahren werden (Pfeil B), um, im Wege entsprechender Zubewegung, z. B. G, des Speichers 8, das benötigte Werkzeug, z. B. 6, herauszugreifen und dann - als Folge entsprechender Rückbewegung (Pfeil R) dem Bearbeitungszweck bzw. der hierfür erforderlichen Position zuzuführen.

Grundproblem der vorliegenden Erfindung ist es, daß z. B. eine Drehmaschine der in Fig. 1 und 3 schematisch angegebenen Art thermisch bedingten Expansionen des Maschinensystems unterworfen ist, die wiederum zu Wanderungen der betreffenden Null-Punkte P1 (Spindel 2 nebst Bauteil 1), P2 (Werkzeugträger 3) und P3 (Meßeinrichtung 4) führen. Dabei ist es u. a. erfindungswesentlich, daß auch die betreffende Meßeinrichtung 4 nebst eines zugehörigen Werkzeugmeßtasters $T_2$ in die im einzelnen noch erläuterte Kompensationsmethode mit einbezogen wird.

In Abweichung von Sollwertvorgaben in der betreffenden, computergestützten Maschinensteuerung 5 zwecks Bearbeitung des Bauteils 1 können also bereits geringste Positionsveränderungen (Istwerte) der Nullpunkte P1, P2 für sich bzw. zueinander zu relativen Positions- und damit Bearbeitungsfehlern führen, die es vorliegend auf vergleichsweise einfache Weise zu kompensieren gilt. D1 bzw. D2 kennzeichnen in Fig. 1 z. B. den jeweils zu bearbeitenden Innen- bzw. Außendurchmesser des Bauteils 1 (einprogrammierte Sollwertdurchmesser), die durch thermisch bedingte Wanderungen im Maschinensystem falsch hergestellt werden könnten (Istwerte) und so, wegen der Nullpunktverschiebung (P2-Werkzeugträger 3) eine Nachkorrektur der gewählten Position (Sollwert) des Werkzeugträgers 3 nebst Werkzeugs 6 und der Werkzeugschneide 7 relativ zu den Bearbeitungsdurchmessern D1, D2 (Istwerte) erforderlich machen. Grob schematisch ist hierzu in Fig 2 die relative thermische Wanderung zum einen horizontal, also betreffend Werkzeug 6 nebst Schneidkantenposition zu Werkstück (Bauteil 1) durch x verkörpert. y in Fig. 2 verkörpert die zusätzlich bei der Bauteilbearbeitung oder -herstellung zu berücksichtigende relative axiale thermische Wanderung in Richung der Achse A, also betreffend die Position des Werkzeugs 6 nebst Schneidkante 7 relativ zur axialen Abmessungsänderung (Istwert) des Bauteils 1.

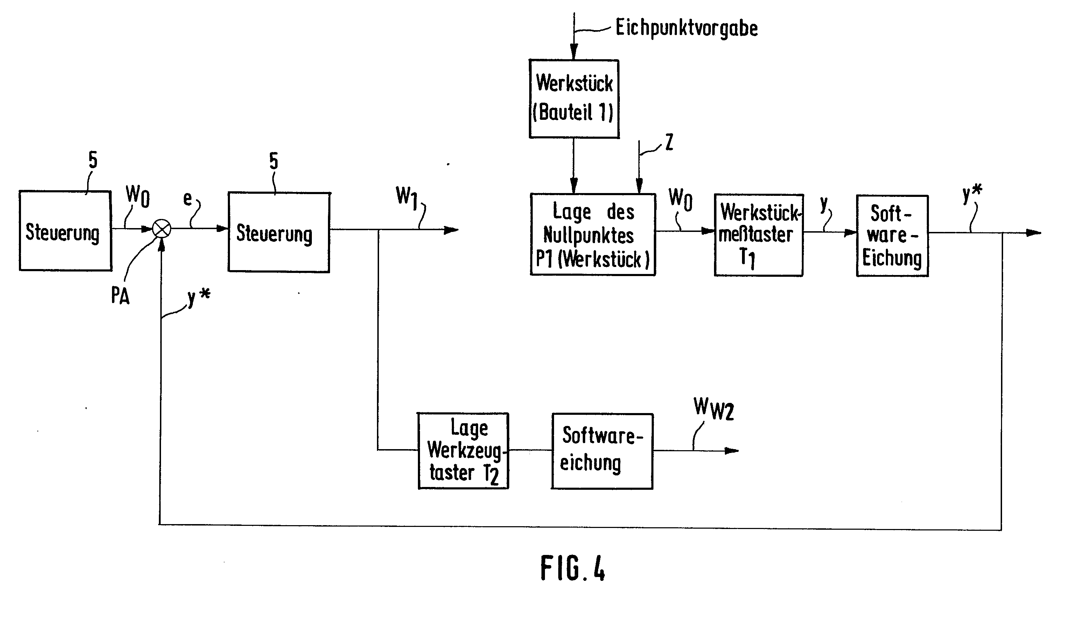

Zur Kompensation der thermisch bedingten Verschiebung der Nullpunkte P1, P2 und P3 (Fig. 1) ist es vorgesehen, daß bei auf der Spindel 2 aufgespanntem Bauteil 1, anstelle des Werkzeugs 6 (Fig. 2), ein Werkstückmeßtaster $T_1$ in den Werkzeugträger 3 automatisch eingewechselt wird; der Werkstückmeßtaster $T_1$ befindet sich in Sollvorgabeposition (in Fig. 4 auch alter Vorgabewert $W_0$ genannt); dieser Werkstückmeßtaster $T_1$ wird mit Rücksicht auf die tatsächliche Position des Bauteils 1, hier z. B. durch mechanische Berührung der betreffenden Innenwand einer schon vorhandenen bzw. vorbearbeiteten Ausnehmung 1′ auf die tatsächlich vorhandene Nullpunktlage (P1) einjustiert (kalibriert), und zwar gemäß neuem Vorgabewert W1 des Werkzeugträgers 3 - siehe auch Fig. 4; hierauf erfolgt eine Justierung des Null-Punktes P3 der Werkzeugmeßeinrichtung 4 mit Werkzeugtaster $T_2$ auf einen neuen Vorgabewert $Ww_z$ (siehe auch Fig. 4) über den zuvor auf $W_1$ einjustierten Werkstückmeßtaster $T_1$. Für die zuletzt genannte Null-Punkt-Justierung wird der Werkstückmeßtaster $T_1$ mittels des Werkzeugträgers 3 in Pfeilrichtung E, parallel zur Achse A, aus der Ausnehmung 1′ heraus - und dann in

Pfeilrichung R (siehe auch Fig. 2) gegen den Werkzeugmeßtaster $T_2$ verfahren (mechanische Berührung). Die genannten Justiervorgänge sind beliebig oft wiederholbar, gegebenenfalls zwei- oder mehrfach; es handelt sich dabei in der Regel um Feinstjustiervorgänge der betreffenden Taster $T_1$, $T_2$ im Rahmen eingangs angegebener Positionsfehler, etwa in μm-Bereichen bis 100 μm und gegebenenfalls auch darüber.

Für die Feinstjustierung können miniaturisierte, elektromechanische Getriebekonfigurationen verwendet werden, die sowohl in den Werkzeugträger 3 als auch in die Meßeinrichtung 4 oder in den Arm 9 (Fig. 3), der den Werkzeugmeßtaster $T_2$ enthält, integriert sein können.

Gemäß Fig. 3 kann dieser Arm 12 aus seiner Ruhelage z. B. in eine solche Betriebslage verschwenkt werden, in der der Werkzeugmeßtaster $T_2$ z. B. parallel, oberhalb des Bauteils 1 (Werkstücks) nebst Spindel 2 liegt, so daß er gemäß Pfeil R (Bewegungsrichtung des Trägers 3)

unbehindert vom Werkstückmeßtaster $T_1$ kontaktiert werden kann.

Nachdem die Justierung des Null-Punktes P3 der Werkzeugmeßeinrichtung 4 nebst Werkzeugmeßtaster $T_2$ auf $Ww_z$ vollzogen worden ist, wird der Werkstückmeßtaster $T_1$ im Werkzeugspeicher 8 (Fig. 3) in ein Werkzeug 6 oder 6′ oder 6″ und sofort automatisch ausgewechselt (Pfeile B bzw. G oder F) wie eingangs bereits sinngemäß erörtert. Vor mechanischer Bearbeitung wird dann das eingetauschte Werkzeug 6, 6′, 6″ ... gemäß Bewegungsrichtung R des Trägers 3 gegen den in Betriebsstellung befindlichen Werkzeugmeßtaster $T_2$ verfahren, um so das gegen $T_1$ eingetauschte Werkzeug über die hinsichtlich thermisch bedingter Positionsabweichungen (Störungsgröße Z - Fig. 4) korrigierte Position $Ww_z$ des Werkzeugmeßtasters $T_2$ einzujustieren.

Im Rahmen des besprochenen Sachverhalts ist es selbstverständlich, daß der Werkzeugspeicher 8 bedarfsweise einen oder mehrere auf Abruf gehaltene und zum Einwechseln geeignete bzw. vorbereitete Werkstückmeßtaster $T_1$ sowie schon erwähnte Werkzeuge 6, 6′ usw. enthält.

Wie in Fig. 1 grob schematisiert angegeben, befindet sich die Werkzeugmeßeinrichtung 4 in signalübertragender Verbindung (Signalfluß S) mit der Maschinensteuerung 5. 4 ist dem Grunde nach ein Meßwertgenerator als Funktion aus empfangenen Sollwertvorgaben (alter Vorgabewert $T_2$) auf der einen Seite sowie als Funktion empfangener tatsächlicher Positionen (Istwerte) auf der anderen Seite (neue Vorgabewert $W_1$).

Der schematische Signalfluß St in Fig. 1 kennzeichnet eine elektrohydraulische Verbindungskette zwischen Maschinensteuerung 5 und Werkzeugträger 3, die so ausgebildet ist, daß u. a. Elektrosignale für die Trägerverstellung aus 5 über geeignete Rückführungsglieder in eine hydraulische Verstellung des Werkzeugträgers 3 umgesetzt werden können. St verkörpert ferner schematisch die Rückkoppelung Träger 3/Maschinensteuerung 5 (cumputergestützt), um die "alten" bzw. "neuen" Vorgabepositionen $W_0$ bzw. $W_1$ (siehe auch Fig. 4) bereitzustellen.

In schrittweiser Zusammenfassung stellt sich mithin der Ablauf des erfindungsgemäßen Kompensationsverfahrens z. B. während einer laufenden Bearbeitung wie folgt dar:
- automatisches Einwechseln des Werkstückmeßtasters $T_1$ in den Werkzeugträger 3;
- Kalibrierung bzw. Einjustierung des Werkstückmeßtasters $T_1$ durch mechanische Kontaktierung des Werkstücks (Bauteil 1), und damit in bezug auf dessen tatsächliche Nullpunktsabweichung;
- Nullpunktjustierung der Werkzeugmeßeinrichtung 4 über den zuvor einjustierten Werkstückmeßtaster $T_1$ in bezug auf die von letzterem registrierte ther-

mische Positionsabweichung;
- automatisches Auswechseln des Werkstückmeßtasters $T_1$ am Werkzeugträger 3 in das Werkzeug 6;
- Einjustieren des Werkzeugs 6 an der hinsichtlich thermisch bedingter Positionsabweichungen korrigierten Werkzeugmeßeinrichtung 4;
- Fortsetzung des programmierten Bearbeitungsablaufes.

In Kombination mit Fig. 1 und Fig. 2 sei die Erfindung im Wege eines Steuerschemas anhand der Fig. 4 wie folgt erläutert. Zunächst unter Hinweis auf Fig. 1 und 2 sei $W_0$ = alter Vorgabewert aus der Maschinensteuerung 5 betreffend Position des Werkzeugs 6 zum Werkstück; gemäß Fig. 4 verschiebt also die Störgröße Z (thermische Wanderung$d\Delta x, \Delta y$) die Lage des Nullpunktes P1 des Werkstücks (Bauteil 1) gegenüber dem alten Vorgabewert $W_0$ aus der Maschinensteuerung 5. Der Werkstückmeßtaster $T_1$ am Werkzeugträger 3 stellt durch mechanische Kontaktierung z. B. der betreffenden Innenwand der Ausnehmung 1′ des Bauteils 1 (Werkstücks) den Istwert der Nullpunktlage fest und identifiziert damit die verschobene Lage (Istwert) des Nullpunktes P1 des Werkstücks; diese Information ist Y. Diese Information Y (Istwert) wird in die Eich-Software eines zur Maschine gehörigen Rechensystems (Computer) eingespeist, das die empfangene Information Y zum Wert Y* verarbeitet = korrigierter Istwert um die Störungsgröße Z (thermische Wanderung). Gemäß angegebenem Signalfluß wird dann dieser korrigierte Istwert Y* über den Additionspunkt PA zur Maschinensteuerung 5 rückgeführt und über den ursprünglichen bzw. alten Vorgabewert W0 zum neuen zwecks Steuerung des Werkzeugträgers 3 maßgeblichen Vorgabewert $W_1$ (siehe auch Fig. 2) aus der Regelabweichung e errechnet. Um den neuen Vorgabewert $W_1$ des Werkzeugträgers 3 z. B. für ein oder mehrere zwecks Bearbeitung gegen den Werkstückmeßtaster $T_1$ eingetauschte Werkzeuge 6 oder 6′ oder 6″ usw. (Fig. 3) garantieren zu können - und zwar im Wege schon erörterter Nullpunktjustierung (P3) der mit dem Werkzeugmeßtaster $T_2$ gekoppelten Werkzeugmeßeinrichtung 4 über den auf $W_1$ einjustierten Werkstückmeßtaster $T_1$ (Kontaktierung $T_1$, $T_2$) - wird $W_1$ über eine spezielle maschinenseitig integrierte Eich-Software mit dem ursprünglichen Vorgabewert bezüglich der Position des Werkzeugmeßtasters $T_2$ verrechnet; hieraus wird dann der neue Vorgabewert $W_{wz}$ bezüglich der Position des Werkzeugmeßtasters $T_2$ ermittelt. Der genannte Abgleich findet zeitlich punktuell statt und wird als Funktion der Störgröße Z (thermische Wanderung) ausgelöst, sobald ein bestimmter Schwellenwert überschritten wird, der empirisch vorliegt. Wäre die Störgröße Z nicht vorhanden, so würde Soll-Istwertübereinstimmung vorliegen ($W_0 = y = y^*$ bzw.

$W_0 = W_1$ bzw. $W_{wz}$), so daß $W_0$ mithin selbstverständlich nicht korrekturbedürftig wäre.

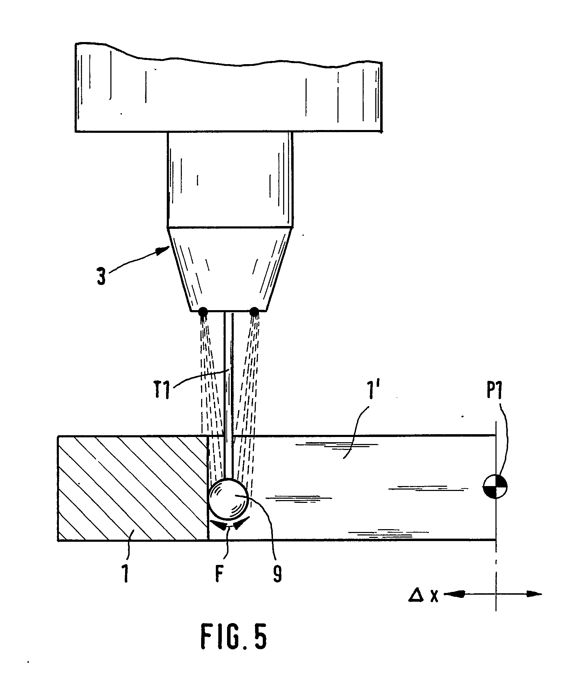

Eine Möglichkeit zum Abtasten und Messen des Bauteils 1 ist am Beispiel der Fig. 5 anhand eines mechanisch-elektrischen Werkstückmeßtasters $T_1$ aufgezeigt. Ein solcher Werkstückmeßtaster $T_1$ ist ohne weiteres in den Werkzeugträger 3 der Drehmaschine nach Fig. 1 und 3 einspannbar und auf kabellosem (telemetrischem) Wege oder mit Kabel mit der Werkzeugmeßeinrichtung 4 als Meßwertgenerator verbindbar. Bevorzugt wird ein Schalten des Meßtastersystems, welches in automatischen Werkzeugwechseleinrichtungen auch automatisch einsetzbar ist. Das Schaltsignal wird dabei durch mechanische Auslenkung des Werkstückmeßtasters $T_1$ erzeugt, wie in Fig. 5 durch den Schwenkpfeil F dargestellt, d. h. der Taster $T_1$ biegt sich um einen bestimmten Winkel beim Antasten an das Bauteil 1 aus. Angenommen, das Bauteil 1 wäre auf der Spindel der Drehmaschine fest aufgespannt und habe sich vor dem kombinierten Justier-Eichvorgang durch thermische Einflüsse gemäß x über eine gewisse Zeitdauer hin verlagert, so kann hierfür die Durchbiegung des Tasters, bzw. die Auslenkung F der Kugel 9 an der Spitze des Werkstückmeßtasters $T_1$ je nach Vorspannkraft und in Abhängigkeit von der Länge und dem E-Modul des Meßtasters $T_1$ korrigiert werden, indem der Korrekturwert mit dem Meßergebnis verrechnet wird. Der Werkzeugmeßtaster $T_2$ (Fig. 1) kann auf die gleiche oder ähnliche Weise aufgebaut sein.

Im Wege der insbesondere zu Fig. 5 beschriebenen Meßtasterkonfigurationen können zur Signalübertragung auch sowohl induktive als auch auf Infrarotstrahlung basierende Übertragungswege und Mittel vorgesehen werden, welche an sich bekannt sind und deshalb hier nicht näher beschrieben werden.

Das erfindungsgemäße Verfahren kann zu jedem gewünschten Zeitpunkt während der Bearbeitung angewandt werden, ohne z. B einen Umbau bzw. eine Umrüstung von Eichwerkstücken auf der Spindel durchführen zu müssen, und zwar sowohl für Einzelteilfertigung als auch für Serienfertigung zur Einhaltung sehr geringer Toleranzen. Die Erfindung stellt deshalb einen kostengünstiges und flexibles Verfahren dar, um höchsten Qualitätsanforderungen zu genügen und die Maschinenausnützung zu steigern. Insbesondere ist eine starke Reduzierung der Rüstzeit ein weiterer entscheidender Vorteil des erfindungsgemäßen Verfahrens.

**Ansprüche**

1. Verfahren zur Kompensation einer thermisch bedingten Nullpunktverschiebung eines zur mechanischen Bearbeitung gehalterten Werkstücks (1) gegenüber einem an einem Werkzeugträger (3) angeordneten Werkzeugs (6) bei einer automatisch gesteuerten Bearbeitungsmaschine, insbesondere Drehmaschine, wobei Meßtaster verwendet werden, mit welchen Abweichungen zwischen einer programmierten und einer tatsächlichen Position des Werkzeugs gegenüber dem Werkstück festgestellt und korrigiert werden, dadurch gekennzeichnet, daß nach dem Aufspannen des Werkstücks (1) ein in den Werkzeugträger (3) eingespannter Werkstückmeßtaster ($T_1$) in Bezug auf die tatsächliche Position eines zu bearbeitenden oder bereits bearbeiteten Werkstücks (1) im Wege mechanischer Berührung einjustiert wird und daß eine Nullpunktjustierung einer mit einem Werkzeugmeßtaster ($T_2$) gekoppelten Werkzeugmeßeinrichtung (4) über den einjustierten Werkstückmeßtaster ($T_1$) durchgeführt wird.

2. Verfahren nach Anspruch 1, gekennzeichnet durch folgende Schritte:
- Automatisches Einwechseln des Werkstückmeßtasters ($T_1$) in den in einer Sollvorgabeposition (alter Vorgabewert Wo) befindlichen Werkzeugträger (3);
- Kalibrierung bzw. Justierung des Werkstückmeßtasters ($T_1$) auf einen neuen Vorgabewert (W1) des Werkzeugträgers (3) als Folge einer durch mechanische Kontaktierung des Werkstückmeßtasters ($T_1$) mit dem Werkstück (1) festgestellten Verschiebung der Nullpunkte (P1, P2);
- Justierung des Werkzeugmeßtasters ($T_2$) auf einen neuen Vorgabewert (Wwz), der durch mechanische Kontaktierung des auf den neuen Vorgabewert (W1) einjustierten Werkstückmeßtasters ($T_1$) mit dem Werkzeugmeßtaster ($T_2$) festgestellt wird;
- Automatisches Auswechseln des Werkstückmeßtasters ($T_1$) am Werkzeugträger (3) in ein Werkzeug (6′);
- Einjustieren dieses Werkzeugs (6′) durch mechanische Kontaktierung des auf den neuen Vorgabewert ($W_{wz}$) einjustierten Werkzeugmeßtasters ($T_2$);
- Fortsetzung des programmierten Bearbeitungsablaufs.

3. Vorrichtung zur Durchführung des Verfahrens nach Anspruch 1 oder 2 bei einer Bearbeitungs-, insbesondere einer Drehmaschine, dadurch gekennzeichnet, daß der Werkzeugmeßtaster ($T_2$) an einem am Maschinenbett (10) verschwenkbar angeordneten Arm(T12) angeordnet ist, mit dem der Meßtaster ($T_2$) aus einer seitlich der Maschinenspindel (2) befindlichen Ruhestellung in eine oberhalb der Spindel (2) bzw. des Werkstücks (1) befindliche Kontaktierungs- und Meßposition (Taster $T_1$; $T_2$) verfahrbar ist.

4. Vorrichtung zur Durchführung des Verfahrens nach Anspruch 1 oder 2, dadurch gekennzeichnet, daß die Werkzeugmeßeinrichtung (4) an den Werkzeugmeßtaster ($T_2$) enthaltenden Schwenkarm (12) angeordnet ist.

5. Vorrichtung zur Durchführung des Verfahrens nach Anspruch 1 oder 2, dadurch gekennzeichnet, daß am Maschinenbett (10) ein karusselartiger, motorisch um eine Drehachse verstellbarer Speicher (8) für Werkzeuge (6,6′,6″, 6‴) sowie einen oder mehrere Werkstückmeßtaster ($T_1$) angeordnet ist.

6. Vorrichtung zur Durchführung des Verfahrens nach Anspruch 1 oder 2, dadurch gekennzeichnet, daß der Werkzeugträger (3) mittels eines Schlittens (9) an einer am Maschinenbett (10) angeordneten Laufschiene (11) in Richtung (B) auf den Werkzeugspeicher (8) oder in Richtung (R) auf das Werkstück (1) bzw. in Richtung auf den ausgefahrenen Werkzeugmeßtaster ($T_2$) verfahrbar angeordnet ist.

FIG. 1

FIG. 2

St

5

E

P2

3

R

1'

P3

4

T2

S

T1

1

A

P1

2

C

D1

D2

P2

3

6

Δx

7

W0

Δy

6

7

W1

EP 0 365 958 A2

FIG. 3

FIG.4

FIG.5